# EUROPEAN PATENT SPECIFICATION

(11) **EP 2 955 347 B1**
(45) Date of publication and mention of the grant of the patent: **24.07.2019**
(21) Application number: 14749439.7
(22) Date of filing: 05.02.2014
(51) Int. Cl.: F01N 9/00, F01N 3/029

(54) **PARTICLE FILTER SYSTEM FOR ENGINES AND METHOD FOR REDUCING PRESSURE LOSS IN SAID FILTER**
PARTIKELFILTERSYSTEM FÜR MOTOREN UND VERFAHREN ZUR VERRINGERUNG VON DRUCKVERLUSTEN IN DIESEM FILTER
SYSTÈME DE FILTRE À PARTICULES POUR MOTEUR ET PROCÉDÉ DE RÉDUCTION DE LA PERTE DE PRESSION DUDIT FILTRE

(30) Priority: 11.02.2013 ES 201330164
(43) Date of publication of application: 16.12.2015
(73) Proprietor: Universitat Politécnica de Valencia, 46022 Valencia (ES)
(72) Inventor: DESANTES FERNÁNDEZ, José Maria, E-46022 Valencia (ES); PAYRI GONZÁLEZ, Francisco, E-46022 Valencia (ES); PIQUERAS CABRERA, Pedro, E-46022 Valenciaes (ES); SERRANO CRUZ, José Ramón, E-46022 Valencia (ES)
(74) Representative: Maslanka Kubik, Dorota Irena
(86) International application number: PCT/ES2014/000015
(87) International publication number: WO 2014/122340

(56) References cited:
- WO-A2-2008/153775
- DE-A1-102006 032 886
- DE-A1-102012 207 903
- DE-C1- 10 026 695
- FR-A1- 2 950 929
- JP-A- 2004 156 500
- US-A- 4 665 690
- US-A- 4 665 690
- US-A- 4 685 291
- US-A1- 2010 175 370

## Description

### Field of the invention

The present invention relates to the field of internal combustion engines, and more specifically to a particle filter system located in an exhaust line of an internal combustion engine and to a method for reducing the pressure loss thereof.

### Background of the Invention

Control of pollutant emissions from internal combustion engines and the need to comply with the laws regulating these emissions have led to the need of using exhaust gas post-treatment systems in the state of the art.

Most passenger transport vehicles and heavy goods vehicles have one or more exhaust gas post-treatment systems. Specifically, the following types of post-treatment systems can be identified for internal combustion engines:
- Oxidation pre-catalysts and main oxidation catalysts for the oxidation of carbon monoxide (CO) and unburned hydrocarbons (HC).
- Particle filters for retaining soot particles generated in the combustion process until the oxidation thereof by means of the regeneration process.
- Nitrogen oxide catalysts for eliminating nitrogen oxide (NO_{X}) emissions in the presence of a reducing agent.

However, the presence of post-treatment systems in the exhaust line of the engines involves an increase in exhaust back pressure due to the pressure loss taking place in these systems. The increase in exhaust back pressure leads to an increase in engine's pumping work, which finally translates into an increase in specific fuel consumption.

This effect is particularly relevant in the case of the particle filter. All particle filters are designed for accumulating a certain amount of particles. As the particle filter starts to get overloaded, the particles create an obstruction against the passage of the flow such that the latter leads to an excessive increase in pressure loss, significantly affecting the specific fuel consumption of the engine.

As a result of this process, strategies for eliminating soot particles accumulated in the particle filter by means of an oxidation process referred to as regeneration have been developed in the state of the art. Regeneration systems are mainly classified into passive systems, i.e., those in which conditions for the regeneration to take place without auxiliary means are reached, and active systems, those in which other auxiliary systems, such as injection system control, additional burners, resistors, etc., must be used to complete the regeneration process. In practice, passive regeneration systems are insufficient and combination of passive and active regeneration techniques is necessary.

The presence of the particle filter in the exhaust line of the engines therefore leads to an increase in the specific fuel consumption of the engine due to several reasons: the pressure loss generated by clean filters; the increase in pressure loss occurring as particles accumulate; and the application of active regeneration techniques for oxidizing the accumulated particles. As is already known by the person skilled in the art, these active regeneration techniques cause an increase in fuel consumption.

Various regeneration systems for oxidizing accumulated particles, such as for example, those disclosed in patent document US 4665690 A or US 2003/0230079 are known in the state of the art.

Patent document US 4665690 A discloses an exhaust gas cleaning system for an internal combustion engine which traps and burns combustible particles contained in exhaust gases. Said system is provided with a particle filter for trapping combustible particles contained in exhaust gases, an injector device for injecting material promoting the combustion of the combustible particles, in addition to other elements for controlling the combustion process of the combustible particles such as a bypass conduit bypassing the device injector and the particle filter, or a flow control valve which controls the amount of exhaust gases flowing through the bypass conduit to control the amount of exhaust gases flowing towards the particle filter. Accordingly, oxidation process of the accumulated particles has been disclosed referred to as active regeneration of the filter with the use of combustion promoting liquid.

Likewise, patent document US 2003/0230079 discloses an exhaust gas cleaning system which allows determining the optimum time at which to perform an active regeneration of the particle filter, preventing excessive use of active regeneration techniques and therefore reducing deterioration in fuel consumption that occurs during said active regeneration.

However, there is still a need in the art of a system and method for reducing pressure loss which allow prolonging the time of use of a particle filter before it needs to be subjected to said active regeneration, preventing high fuel consumption entailed by said active regeneration.

### Brief Description of the Invention

To solve the mentioned drawbacks of the prior art, the present invention discloses, in a first aspect, a particle filter system for engines comprising a particle filter located in an exhaust line of an internal combustion engine, comprising a first pressure sensor arranged at the inlet of the particle filter and a second pressure sensor arranged at the outlet of the particle filter, for determining a pressure loss between the inlet and the outlet of the particle filter. The system further comprises:
- a water injector located in the inlet region of the particle filter for injecting pressurized water towards said particle filter in a restructuring process for restructuring particles accumulated in said particle filter;
- a conduit arranged between at least one water supply source and said injector;
- an injection pump arranged in said conduit for increasing water pressure to an injection pressure; and
- a control unit controlling the actuation of the injection pump depending on the pressure loss determined by the pressure sensors, wherein the restructuring of the particles accumulated in the monolith of the particle filter, caused by water injection, reduces the pressure loss of the particle filter without having to carry out the regeneration process, without reducing the trapped mass of particles and without reducing filtering efficiency and thereby delaying the application time of active regeneration techniques.

According to a second aspect, the present invention discloses a method for reducing pressure loss of a particle filter with soot accumulation located in an exhaust line of an internal combustion engine, comprising the steps of:
- detecting a pressure loss between the inlet and the outlet of the particle filter; and
- injecting pressurized water into the inlet of the particle filter when the pressure loss reaches a permitted maximum value.

The system and method proposed by the present invention thereby allow reducing exhaust back pressure by means of injecting water into the inlet of the particle filter. The restructuring of the particles accumulated in the monolith of the particle filter, caused by water injection, reduces the pressure loss of the particle filter without having to carry out the regeneration process, without reducing the trapped mass of particles and without reducing filtering efficiency. As a result, the capacity of the mass of particles and ash to accumulate in the particle filter for a specific pressure difference between the inlet and outlet thereof (exhaust back pressure for the engine) is increased, delaying the application time of active regeneration techniques which lead to, as described above, a high fuel consumption and increase pollutant gas emissions from the engine.

The present invention therefore allows minimizing the effects on the increase in specific fuel consumption entailed by the presence and operation of the particle filter on the engine.

### Brief Description of the Drawings

The present invention will be better understood in reference to the following drawings illustrating preferred embodiments of the invention that are provided by way of example and must not be interpreted as limiting the invention in any way.
Figure 1 depicts a diagram of a first preferred embodiment of the proposed system in which the water injected upstream of the particle filter is obtained from the cooling system of the engine.
Figure 2 depicts a diagram of a second preferred embodiment of the proposed system in which the injection water is the water condensed in different equipment present in the vehicle or installation.
Figure 3 depicts a diagram of a third preferred embodiment of the proposed system having a discharge valve in the tank storing the injection water.
Figure 4 depicts a diagram of a fourth preferred embodiment of the proposed system having a heat exchanger in the exhaust line of the engine for generating injection water through condensation.
Figure 5 depicts a diagram of a fifth preferred embodiment of the proposed system in which the injection water can come from the cooling system of the engine or the water generated, through condensation, by the subsystems of the vehicle or of the installation and by exhaust gases, in this last case generated by means of using a heat exchanger.

### Detailed Description of the Preferred Embodiments

As described above, the present invention discloses a system and a method the objective of which is to inject water into the inlet of the particle filter when the latter is loaded for reducing the pressure loss it generates and, as a result, postponing the time for regenerating the filter.

The term "water" will be used throughout the present specification and it must be understood as an aqueous medium used for restructuring the particles accumulated in the particle filter and the objective of which is not the combustion of said particles according to the process known as regeneration, so it does not need to have specific properties to promote said combustion.

The injected water is transported along the channels of the ceramic monolith, passing through the particle layer and the porous substrate. This transport phenomenon causes the entrainment of water in liquid and gaseous state over soot particles accumulated in the filter. This process modifies the porous structure of the particles accumulated in each of the layers (inside the porous wall and particle layer). This leads to an increase in the permeability of the porous substrate and of the particle layer, as well as to a change in the thickness thereof along the length of the inlet channels, an effect refereed to as "restructuring". The pressure loss generated in the particle filter is thereby finally reduced. Earlier experimental studies have demonstrated that this effect occurs without reducing the filtering efficiency of the particle filter and without reducing the accumulated mass of particles.

The size of the particle filter is related to the maximum pressure loss permitted depending on the operating conditions of the engine and to ash accumulation which will occur before performing maintenance operations on the particle filter. The maximum mass of particles that can accumulate before starting the active regeneration process is thereby restricted. Therefore, the fact that water injection for a given accumulated mass of particles leads to the reduction in pressure loss, contributes to the reduction in the specific fuel consumption of the engine in two ways:
- Firstly, for a given accumulated mass of particles, the reduction in pressure loss in the particle filter directly leads to the reduction in the specific fuel consumption of the engine and thereby to the increase in its efficiency.
- Secondly, during and after water injection and the corresponding reduction in pressure loss, the engine continues to work, such that the particle filter will continue to filter the emitted particles, again increasing the pressure loss. This accumulation process will continue until reaching the maximum accumulated mass of soot or until reaching the maximum permitted pressure loss.

The maximum permitted pressure loss value is determined in an electronic control unit (control unit) of the engine and it depends on the operating conditions of the engine (degree of load (α) and speed (n)). The reduction in pressure loss produced by water injection increases the accumulated mass of particles before reaching the maximum permitted pressure loss. As a result, repeated water injections throughout the filtering process progressively increase the mass of filtered particles, keeping the pressure loss below the permitted maximum value and delaying the start of active regeneration. In other words, throughout an operating time of the given engine, the number of active regenerations performed will be reduced, reducing the penalization of the specific consumption produced by these processes. Finally, water injections will be stopped before the active regeneration event when one of the following conditions arises:
- When the maximum accumulated mass of soot is reached.
- When the time between two water injection events is less than a specific minimum time value.
- When after reducing the time between two water injection events below a specific minimum time value, an increase in the maximum permitted pressure loss does not lead to increasing the time between water injection events.

In the initial steps of the operation of the particle filter, very little ash accumulate in the inlet channels and in the porous means, the effect thereof on pressure loss being negligible. Therefore, the greater capacity of mass to accumulate in the particle filter produced by the system and the presented method directly translates into an increase in the capacity of soot particles to accumulate therein. As a result, it increases the time between active regeneration events with respect to the current practice in the state of the art. In contrast, in the final steps of the operation of the particle filter, ash accumulation is a relevant parameter affecting the pressure loss of the particle filter and determining the need to perform maintenance operations thereon. When the amount of ash accumulated in the particle filter is high, the time between water injections will be increasingly reduced since the capacity of soot to accumulate therein will be reduced by the presence of the ash. When the maximum permitted mass of accumulated particles is reached or when after reducing the time between two water injection events below a specific minimum time value, an increase in the maximum permitted pressure loss does not lead to increasing the time between water injection events and the accumulated mass of soot or the maximum permitted pressure loss is reached before the regeneration, the active regeneration strategy will be restarted. Therefore, the advantage of mass accumulation will be redirected towards ash accumulation as the time of use of the particle filter increases. The result is the increase in the time period between maintenance operations.

Preferred embodiments of the present invention are described below in reference to the attached drawings.

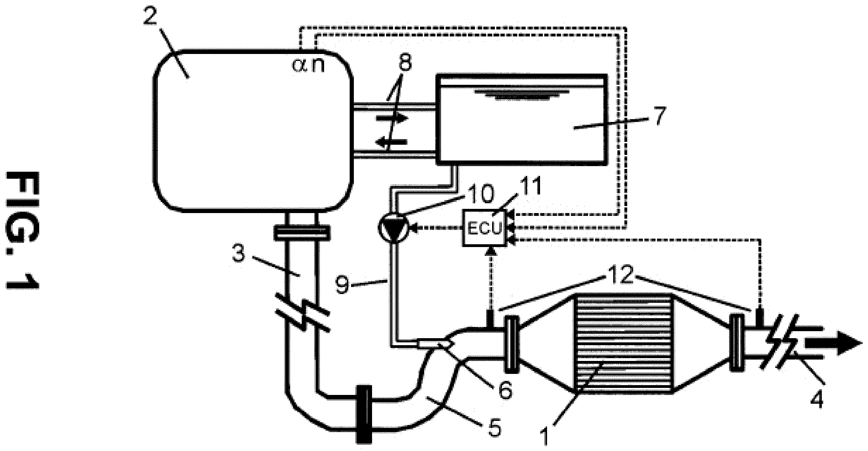

According to a first preferred embodiment of the present invention shown in the Figure 1, a system comprising at least one particle flow filter (1) having a wall with a honeycomb monolithic structure is disclosed. The monoliths of such filters consist of a large number of parallel axial channels and typically of square section. The adjacent channels are alternately sealed at their ends in order to force the flow to go through the porous walls, where soot particles are filtered and accumulate until the regeneration process takes place.

This particle filter (1) is located in the exhaust line of an internal combustion engine (2). Various components characteristics of the exhaust line (3) of the engine (2), which will be defined in each case by the architecture thereof, are located between the engine (2) and the particle filter (1). In a pre-turbo architecture of the particle filter (1), it will have, upstream thereof, collecting conduits of the exhaust system and other exhaust gas post-treatment systems can be located therein. In a post-turbo architecture of the particle filter (1), collecting conduits of the exhaust system, at least one turbine of the supercharging system and other exhaust gas post-treatment equipment can be located in the exhaust line (3) between the engine (2) and the particle filter (1).

Similarly, depending on the architecture of the exhaust line, other exhaust gas post-treatment systems, at least one turbine of the supercharging system or other elements characteristic of the exhaust line of the engine such as at least one muffler can be located in the conduit of the exhaust line (4) located in the outlet section of the particle filter (1).

As seen in Figure 1, at least one water injector (6) is located in the inlet region (5) to the particle filter (1). The water injector (6) is located in the inlet (5) of the particle filter (1) for injecting pressurized water towards said particle filter (1) such that a homogenous mixture with the exhaust gases is assured before entering the monolith of the particle filter (1).

According to this first preferred embodiment, the water injector (6) is fed by means of a cooling system (7) of the engine (2), feeding cooling water to the engine (2) through ducts (8) and to the water injector (6) through the conduit (9). An injection pump (10) which increases the water pressure to an injection pressure regulated by an electronic control unit (11) (ECU) is located in the conduit (9). The injection signal on the pump (10) determined by the control unit (11) depends on the operating conditions of the particle filter (1), and can also depend on the operating conditions of the engine (2). The operating conditions of the engine (2) which will affect water injection will be speed (n) and degree of load (α). The operating condition of the particle filter (1) depending on which the control unit (11) actuates the injection pump (10) is the pressure loss in the particle filter (1). Said pressure loss is determined by means of a first pressure sensor (12) arranged at the inlet (5) of the particle filter (1) and a second pressure sensor (12) arranged at the outlet of the particle filter (1).

When for the operating conditions of the engine (2) defined by the speed and degree of load, the pressure loss in the particle filter (1) reaches a permitted maximum value, the control unit (11) actuates the injection pump (10) and the injector (6) for carrying our water injection. The specific injection pressure depends on the operating conditions of the engine (speed and degree of load) for certain characteristics of the water injector (6).

When the maximum permitted accumulated mass of soot is reached, the water injection strategies will be canceled to proceed to the active regeneration of the particle filter. Likewise, when the time between injections is reduced below a minimum time value indicated in the control strategies of the control unit (11), it means that the particle filter (1) has reached maximum saturation for which water injection is effective. In this situation, the maximum pressure loss to be controlled in the particle filter (1) will be increased depending on the operating conditions of the engine (2) and the water injection process will be restarted. The water injection strategies will be canceled once failing to increase the time between water injection events by means of this method. The particle filter (1) will continue to filter and accumulate larger amount of mass until, for the speed and the degree of load of the engine, a permitted maximum value of accumulated mass of soot or of pressure loss is reached, which will determine the start of the active regeneration strategies of the particle filter (1).

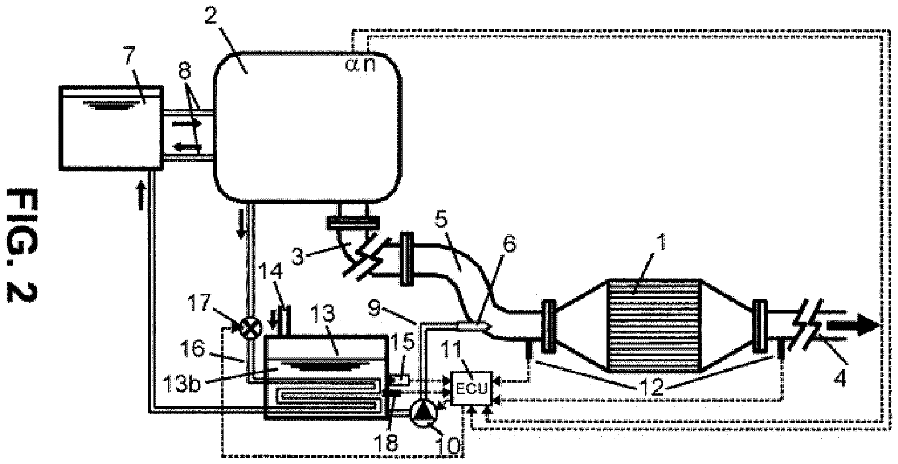

According to a second preferred embodiment of the present invention shown in Figure 2, the water for feeding the injector is condensed water (13b) produced in the different equipment of the vehicle or installation in which the filter system of the invention is installed. This condensed water (13b) is stored free of impurities in an injection water tank (13) which is directly connected to the duct (9). The condensed water is channeled to the tank (13) through a filtering and collection system (14).

In this second preferred embodiment, water injection through the injector (6) is additionally conditioned by the amount of water present in the tank (13). In fact, according to this second embodiment of the present invention, the system further comprises a level sensor (15) in the tank (13) sending information to the control unit (11), such that the control unit (11) determines the actuation of the injection pump (10) based on the information from the level sensor (15).

To prevent the adverse effects of the water (13b) accumulated in the tank (13) becoming frozen, cooling water for cooling the engine (2) can be redirected from the outlet of the engine (2) towards a duct (16) which is located in the tank (13) forming a water-water heat exchanger. In this case, the cooling water for cooling the engine heats the injection water (13b) stored in the tank (13) above the freezing temperature. The water from the engine cooling system is bypassed to the heat exchanger of the tank (13) depending on the open or closed position of a valve (17). The position of the valve (17) is regulated by means of the control unit (11) depending on the information of the water level in the tank (13), information received from the level sensor (15). Furthermore, according to this preferred embodiment of the invention, the system also comprises a temperature sensor (18) in the tank (13) sending information about water temperature to the control unit (11), such that the control unit regulates the valve (17) based also on said information about the water temperature. The return water flow to the starting point of the cooling system (7) through the duct (8) is simultaneously regulated.

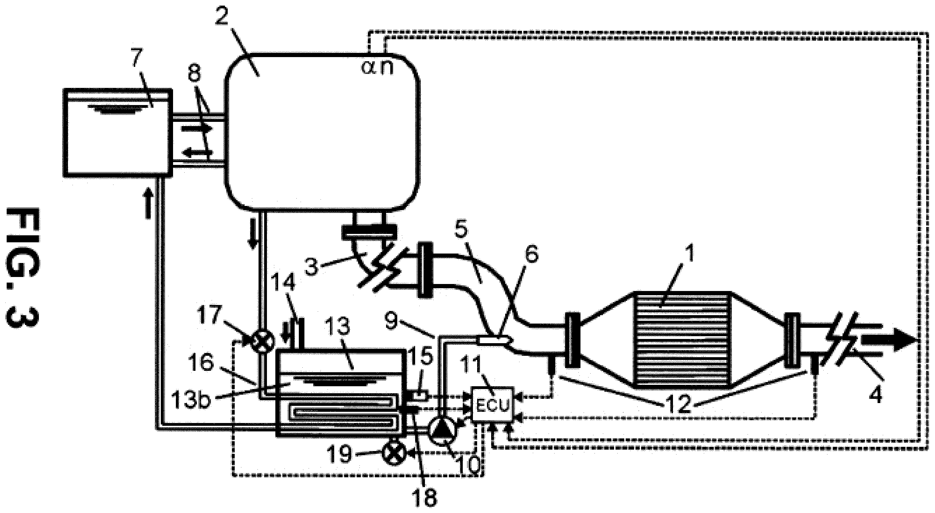

According to a third preferred embodiment of the present invention shown in Figure 3, the tank (13) further comprises a discharge valve (19) also controlled by the control unit (11). When the engine (2) is stopped, the control unit (11) opens the valve (19) to discharge the accumulated water and prevent the adverse effects of the water possibly becoming frozen inside the tank (13).

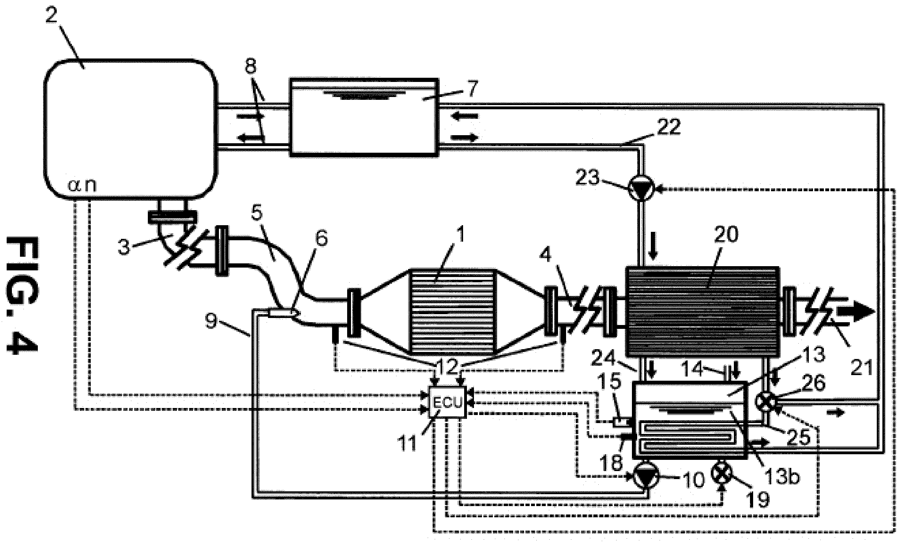

According to a fourth preferred embodiment of the present invention shown in Figure 4, the injection water tank (13) is fed with water condensed from exhaust gases. The condensed water is generated in a gas-water heat exchanger (20) which is located between a first exhaust pipe (4) and a second exhaust pipe (21). Cooling water is used for condensing the water present in the exhaust gases by means of this heat exchanger (20).

Given that the heat exchanger (20) reduces the temperature of the exhaust gases, it will be placed upstream of the muffling elements. With this configuration, the low exhaust gas temperature will allow manufacturing the muffler elements from a plastic material.

To generate condensed water from the exhaust gases in the heat exchanger (20), the exhaust gases are cooled with cooling water for cooling the engine through a system of ducts (22) through which the water pressurized by the action of a water pump (23) circulates. The water pump (23) is regulated by the control unit (11) depending on the need for obtaining condensed water (water level in the tank (13) detected by the sensor (15)) and by the operating conditions of the engine. Therefore, the water flow rate provided by the pump (23) will be determined by the level of water accumulated in the tank (13) and by the temperature and the water content of the exhaust gas, magnitudes related to speed and degree of load of the engine. The condensed water generated in the heat exchanger (20) is poured into the tank (13) through a duct (24).

The water (13b) accumulated in the tank (13) is heated to prevent it from becoming frozen by the water from the engine cooling system (7), as described above in reference to Figure 2. The water from the cooling system heating the injection water (13b) in the tank (13) can come from the outlet of the engine before returning to the starting point of the cooling system (7), such as in the third embodiment described above in reference to Figure 3. Alternatively, the water coming from the cooling system of the engine is redirected to the tank (13) from the outlet of the heat exchanger (20) through the duct (25) if the heat exchanger (20) is operative, as depicted in Figure 4 (the conduit (15) and the valve (17) have bee omitted from this Figure 4 for the sake of simplicity) . The duct (25) is located inside the tank (13) to give rise to a water-water heat exchanger. There is a three-way valve (26) for regulating the bypass of the water from the cooling system from the outlet of the heat exchanger (20). The position of the three-way valve (26) is regulated by the control unit (11) depending on the water level in the tank (13) indicated by the level sensor (15) and on the temperature of the accumulated water indicated by a temperature sensor (18).

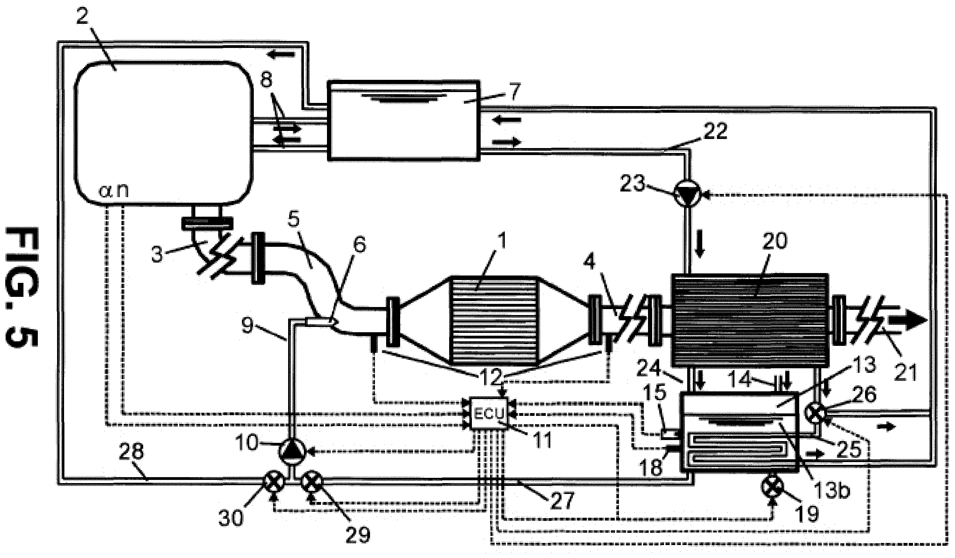

According to a fifth preferred embodiment of the present invention shown in Figure 5, the water injector (6) can be fed both with injection water (13b) coming from the tank (13) through the duct (27) and with injection water coming from the engine cooling system (7) through the duct (28) depending on the level of water accumulated in the tank (13). According to said level, the control unit (11) regulates valves (29) and (30) during water injection. When the water injection level in the tank (13) is sufficient and the water is in liquid state, the injection pump (10) is fed with water through the duct (27) keeping the valve (29) open and closing the valve (30). If the water level in the tank (13) does not reach the minimum value indicated in the injection strategies implemented in the control unit (11) or the accumulated water (13b) is in solid state, the injection pump (10) is fed through the duct (28), keeping the valve (30) open and closing the valve (29). Additionally, it can have a three-way valve performing the functions of regulating valves (29) and (30), bypassing the water feed flow to the pump (10) from ducts (27) or (28).

Although the system of the present invention has been described in reference to specific preferred embodiments thereof, the person skilled in the art will understand that different variations and modifications can be applied without departing from the scope of protection of the attached claims. For example, although different modes for feeding the filter system of the present invention with water have been mentioned, it must be understood that the invention is not limited to any of them, any of the at least one suitable water supply source can be used (cooling water, tank filled with water coming from outside the vehicle or installation in which said system is installed, water from the condensation in various systems of the vehicle or installation, water from exhaust gas condensation, etc).

As described above in the present document, the second aspect the present invention discloses a method for reducing pressure loss of a particle filter with soot accumulation of internal combustion engine.

According to a preferred embodiment of the present invention, the method for reducing pressure loss of a particle filter with soot accumulation comprises the steps of:
- detecting a pressure loss between the inlet and the outlet of the particle filter (for example, by means of a pair of pressure sensors located at the inlet and the outlet of the particle filter, respectively); and
- injecting pressurized water into the inlet of the particle filter (1) when the pressure loss reaches a permitted maximum value.

As a result of the method of the present invention, particles accumulated in the particle filter (1) are restructured and pressure loss through the particle filter (1) is subsequently reduced, whereby allowing prolonging the time of use of said particle filter before having to resort to the active regeneration thereof.

According to an additional preferred embodiment of the present invention, the method further comprises the steps of:
- evaluating the mass of soot accumulated in the particle filter;
- when the mass of soot accumulated in the particle filter reaches the permitted maximum value,
- stopping water injections; and
- performing active regeneration of the particle filter (1).

According to another additional preferred embodiment of the present invention, the method further comprises the steps of:
- measuring the time lapsed between two consecutive pressurized water injections;
- evaluating the mass of soot accumulated in the particle filter;
- when the time lapsed between two consecutive water injections is less than a minimum time value, stopping water injections; and
- performing active regeneration of the particle filter (1) when the accumulated mass of soot or the pressure loss in the particle filter (1) reaches the permitted maximum value.

According to another additional preferred embodiment of the present invention, the method further comprises the steps of:
- measuring the time lapsed between two consecutive pressurized water injections;
- evaluating the mass of soot accumulated in the particle filter;
- when the time lapsed between two consecutive water injections is less than a minimum time value, increasing the maximum pressure loss to be controlled in the particle filter (1) depending on the operating conditions of the engine (2) and restarting water injection process;
- when the time between water injection events does not increase once the maximum pressure loss to be controlled in the particle filter (1) is increased, stopping water injections; and
- performing active regeneration of the particle filter (1) when the accumulated mass of soot or the pressure loss in the particle filter (1) reaches the permitted maximum value.

Therefore, in addition to delaying, on one hand, the use of the active regeneration of the particle filter, said active regeneration of the particle filter is also performed automatically in an optimized manner when it is detected that the pressurized water injection is no longer sufficient to keep the particle filter in suitable conditions of use.

According to another preferred embodiment of the present invention, the injection water used in the cleaning method comes from a tank (13) in which condensed water produced in the different equipment of the vehicle or installation in which the particle filter (1) is installed accumulates. In this case, the method further comprises the steps of:
- measuring the water level in the tank (13); and
- injecting pressurized water into the particle filter (1) depending on the water level measured in the tank (13).

The availability of injection water is thereby assured before performing said water injection operation.

According to another additional embodiment of the present invention, the method further comprises the steps of:
- measuring the water temperature in the tank (13); and
- circulating cooling water in a heat exchanger arranged in the tank (13) when the water temperature measured in the tank (13) is less than a minimum temperature value.

The risk of the water present in the water tank (13) becoming frozen, as described above in the present document, is thereby prevented.

Based on the foregoing, the present invention describes a system and method for reducing pressure loss based on water injection without altering the mass of soot accumulated in the particle filter according to a restructuring process, successfully delaying and controlling the time in which the active regeneration techniques are applied.

High fuel consumption of the active regeneration processes disclosed in the state of the art is thereby prevented, which entails a difference and a clear improvement, such as for example, with respect to patent document US 4665690 A, which describes a method for reducing pressure loss based on the combustion of accumulated soot after injecting a solution that promotes the combustion and therefore the regeneration of the particle filter.

## Claims

1. A particle filter system for engines comprising a particle filter (1) located in an exhaust line of an internal combustion engine (2), comprising a first pressure sensor (12) arranged at the inlet (5) of the particle filter (1) and a second pressure sensor (12) arranged at the outlet of the particle filter (1), for determining a pressure loss between the inlet (5) and the outlet of the particle filter (1), **characterized in that** it further comprises:
- a water injector (6) located in the inlet region (5) of the particle filter (1) for injecting pressurized water towards said particle filter (1) in a restructuring process for restructuring particles accumulated in said particle filter (1);
- a conduit (9) arranged between at least one water supply source and said injector (6);
- an injection pump (10) arranged in said conduit (9) for increasing water pressure to an injection pressure; and
- a control unit (11) controlling the actuation of the injection pump (10) depending on the pressure loss determined by the pressure sensors (12), wherein the restructuring of the particles accumulated in the monolith of the particle filter, caused by water injection, reduces the pressure loss of the particle filter without having to carry out the regeneration process, without reducing the trapped mass of particles and without reducing filtering efficiency and thereby delaying the application time of active regeneration techniques.

2. The filter system according to claim 1, **characterized in that** the control unit (11) actuates the injection pump (10) also depending on the speed (n) and the degree of load (α) of the engine (2).

3. The system according to any of the preceding claims, **characterized in that** the at least one water supply source is selected from the group comprising cooling water for cooling the engine (2), water from the condensation in various equipment of a vehicle or installation in which said system is installed, water from exhaust gas condensation and any combination thereof.

4. The system according to any of the preceding claims, **characterized in that** it comprises a tank (13).

5. The system according to claim 4, **characterized in that** the tank (13) is filled with water condensed from exhaust gases which is obtained in a heat exchanger (20).

6. The system according to any of claims 1, 2 or 4, **characterized in that** the at least one water supply source is a tank with water coming from outside a vehicle or installation in which said system is installed.

7. The system according to any of claims 4 to 6, **characterized in that** it further comprises a level sensor (15) in the tank (13) sending information to the control unit (11), said control unit (11) determining the actuation of the injection pump (10) based on the information from the level sensor (15).

8. The system according to any of claims 6 and 7, further comprising a heat exchanger inside the tank (13) in which heat exchange occurs between the injection water stored in said tank (13) and cooling water for cooling the engine (2) channeled to said heat exchanger through a duct (16, 25).

9. The system according to claim 8, **characterized in that** it further comprises a valve (17, 26) arranged in said duct (16, 25) and controlled by the control unit (11) depending on the information received from the level sensor (15).

10. The system according to claim 9, **characterized in that** it further comprises a temperature sensor (18) in the tank (13) sending information about water temperature to the control unit (11), said control unit (11) controlling the valve (17, 26) based on said information about the water temperature.

11. The system according to any of claims 4 to 10, **characterized in that** it further comprises a discharge valve (19) controlled by the control unit (11), the discharge valve (19) being open when the engine (2) is stopped for discharging the water accumulated in the tank (13) .

12. The system according to any of claims 4 to 11, **characterized in that** it further comprises cooling water for cooling the engine (2) as an additional water supply source.

13. The system according to claim 12, **characterized in that** it comprises a duct (27) conducting water from the tank (13) towards the injector (6) and a duct (28) conducting water from the cooling system (7) towards the injector (6), and further comprises a valve (29) arranged in the duct (27) and a valve (30) arranged in the duct (28), the control unit (11) controlling the opening and closing of the valves (29, 30) depending on a water level in the tank (13) determined by a level sensor (15).

14. A method for reducing the pressure loss of a particle filter (1) located in an exhaust line of an internal combustion engine (2) according to claim 1, comprising the steps of:
- detecting a pressure loss between the inlet and the outlet of the particle filter (1); and
- injecting pressurized water into the inlet of the particle filter (1) when the pressure loss reaches a permitted maximum value;
such that particles accumulated in the particle filter (1) are restructured and pressure loss through the particle filter (1) is reduced.

15. The method according to claim 14, **characterized in that** it further comprises the steps of:
- evaluating the mass of soot accumulated in the particle filter;
- when the mass of soot accumulated in the particle filter reaches the permitted maximum value,
- stopping water injections; and
- performing active regeneration of the particle filter (1).

16. The method according to claim 14, **characterized in that** it further comprises the steps of:
- measuring the time lapsed between two consecutive pressurized water injections;
- evaluating the mass of soot accumulated in the particle filter;
- when the time lapsed between two consecutive water injections is less than a minimum time value, stopping water injections; and
- performing active regeneration of the particle filter (1) when the accumulated mass of soot or the pressure loss in the particle filter (1) reaches the permitted maximum value.

17. The method according to claim 14, **characterized in that** it further comprises the steps of:
- measuring the time lapsed between two consecutive pressurized water injections;
- evaluating the mass of soot accumulated in the particle filter;
- when the time lapsed between two consecutive water injections is less than a minimum time value, increasing the maximum pressure loss to be controlled in the particle filter (1) depending on the operating conditions of the engine (2) and restarting the water injection process;
- when the time between water injection events does not increase once the maximum pressure loss to be controlled in the particle filter (1) is increased, stopping water injections; and
- performing active regeneration of the particle filter (1) when the accumulated mass of soot or the pressure loss in the particle filter (1) reaches the permitted maximum value.

18. The method according to any of claims 14, 15, 16 and 17, wherein the injection water comes from a tank (13) in which condensed water produced in the different equipment of a vehicle or installation in which the particle filter (1) is installed accumulates, **characterized in that** it further comprises the steps of:
- measuring the water level in the tank (13); and
- injecting pressurized water into the particle filter (1) depending on the water level measured in the tank (13).

19. The method according to claim 18, **characterized in that** it further comprises the steps of:
- measuring the water temperature in the tank (13); and
- circulating cooling water in a heat exchanger arranged in the tank (13) when the water temperature measured in the tank (13) is less than a minimum temperature value.

## Patentansprüche

1. Partikelfiltersystem für Motoren umfassend einen Partikelfilter (1), welcher sich in einer Abgasleitung eines Verbrennungsmotors (2) befindet, umfassend einen ersten Drucksensor (12), welcher am Eingang (5) des Partikelfilters (1) angeordnet ist, und einen zweiten Drucksensor (12), welcher am Ausgang des Partikelfilters (1) angeordnet ist, zum Bestimmen eines Druckverlustes zwischen dem Eingang (5) und dem Ausgang des Partikelfilters (1); **dadurch gekennzeichnet, dass** es zusätzlich Folgendes umfasst:
- einen Wasserinjektor (6), welcher sich im Eingangsbereich (5) des Partikelfilters (1) befindet, zum Einspritzen von Druckwasser zum genannten Partikelfilter (1) im Umstrukturierungsprozess zum Umstrukturieren der im genannten Partikelfilter (1) gesammelten Partikeln;
- ein Rohr (9), welches zwischen mindestens einer Wasserzufuhrquelle und dem genannten Injektor (6) angeordnet ist;
- eine Einspritzpumpe (10), welche im genannten Rohr (9) angeordnet ist, zum Erhöhen des Wasserdruckes bis zu einem Einspritzdruck; und
- eine Steuereinheit (11), welche die Betätigung der Einspritzpumpe (10) in Abhängigkeit des von den Drucksensoren (12) bestimmten Druckverlustes steuert, wobei die Umstrukturierung der im Monolith des Partikelfilters gesammelten Partikeln, von der Wassereinspritzung hervorgerufen, den Druckverlust des Partikelfilters verringert, ohne den Regenerierungsprozess durchführen zu müssen, ohne die gefangene Masse von Partikeln zu verringern und ohne die Filterwirksamkeit zu verringern und dadurch die Anwendungszeit von aktiven Regenerierungstechniken zu verzögern.

2. Filtersystem nach Anspruch 1, **dadurch gekennzeichnet, dass** die Steuereinheit (11) die Einspritzpumpe (10) auch in Abhängigkeit der Geschwindigkeit (n) und des Lastgrades (α) des Motors (2) antreibt.

3. System nach einem der vorhergehenden Ansprüche, **dadurch gekennzeichnet, dass** die mindestens eine Wasserzufuhrquelle aus der Gruppe ausgewählt wird, umfassend Kühlwasser zum Kühlen des Motors (2), Wasser aus der Kondensation in mehreren Apparaturen eines Fahrzeugs oder einer Anlage, in welchem/welcher das genannte System installiert ist, Wasser aus der Abgaskondensation und jede Kombination derselben.

4. System nach einem der vorhergehenden Ansprüche, **dadurch gekennzeichnet, dass** es einen Tank (13) umfasst.

5. System nach Anspruch 4, **dadurch gekennzeichnet, dass** der Tank (13) mit Wasser gefüllt ist, welches aus Abgasen kondensiert, welches in einem Wärmeaustauscher (20) erhalten wird.

6. System nach einem der Ansprüche 1, 2 oder 4, **dadurch gekennzeichnet, dass** die mindestens eine Wasserzufuhrquelle ein Tank mit Wasser ist, welches aus dem Äußeren eines Fahrzeugs oder einer Anlage kommt, in welchem/welcher das genannte System installiert ist.

7. System nach einem der Ansprüche 4 bis 6, **dadurch gekennzeichnet, dass** es zusätzlich einen Füllstandsensor (15) im Tank (13) umfasst, welcher der Steuereinheit (11) Auskunft sendet, wobei die genannte Steuereinheit (11) die Betätigung der Einspritzpumpe (10) basierend auf der Auskunft aus dem Füllstandsensor (15) bestimmt.

8. System nach einem der Ansprüche 6 und 7, zusätzlich umfassend einen Wärmeaustauscher innerhalb des Tanks (13), in welchem einen Wärmeaustausch wischen dem Einspritzwasser, welches im genannten Tank (13) gespeichert ist, und Kühlwasser zum Kühlen des Motors (2), welches zum genannten Wärmeaustauscher über eine Leitung (16, 25) geleitet wird, stattfindet.

9. System nach Anspruch 8, **dadurch gekennzeichnet, dass** es zusätzlich ein Ventil (17, 26) umfasst, welches in der genannten Leitung (16, 25) angeordnet ist und von der Steuereinheit (11) in Abhängigkeit der vom Füllstandsensor (15) empfangenen Auskunft gesteuert wird.

10. System nach Anspruch 9, **dadurch gekennzeichnet, dass** es zusätzlich einen Temperatursensor (18) im Tank (13) umfasst, welcher Auskunft über Wassertemperatur zur Steuereinheit (11) sendet, wobei die genannte Steuereinheit (11) das Ventil (17, 26) basierend auf der genannten Auskunft über die Wassertemperatur steuert.

11. System nach einem der Ansprüche 4 bis 10, **dadurch gekennzeichnet, dass** es zusätzlich ein Ablassventil (19) umfasst, welches von der Steuereinheit (11) gesteuert wird, wobei das Ablassventil (19) offen ist, wenn der Motor (2) zum Ablassen des im Tank (13) gesammelten Wassers gestoppt wird.

12. System nach einem der Ansprüche 4 bis 11, **dadurch gekennzeichnet, dass** es zusätzlich Kühlwasser zum Kühlen des Motors (2) als zusätzliche Wasserzufuhrquelle umfasst.

13. System nach Anspruch 12, **dadurch gekennzeichnet, dass** es eine Leitung (27), welche Wasser vom Tank (13) zum Injektor (6) leitet, und eine Leitung (28), welche Wasser vom Kühlsystem (7) zum Injektor (6) leitet, umfasst, und zusätzlich ein Ventil (29), welches in der Leitung (27) angeordnet ist, und ein Ventil (30), welches in der Leitung (28) angeordnet ist, umfasst, wobei die Steuereinheit (11) das Öffnen und Schließen der Ventile (29, 30) in Abhängigkeit eines Wasserfüllstands im Tank (13), welcher von einem Füllstandsensor (15) bestimmt wird, steuert.

14. Verfahren zur Verringerung von Druckverlusten eines Partikelfilters (1), welcher sich in einer Abgasleitung eines Verbrennungsmotors (2) nach Anspruch 1 befindet, umfassend die folgenden Schritte:
- das Erfassen eines Druckverlustes zwischen dem Eingang und dem Ausgang des Partikelfilters (1); und
- das Einspritzen von Druckwasser in den Eingang des Partikelfilters (1), wenn der Druckverlust einen zugelassenen Maximalwert erreicht;
so dass die im Partikelfilter (1) gesammelten Partikeln umstrukturiert werden und der Druckverlust durch den Partikelfilter (1) verringert wird.

15. Verfahren nach Anspruch 14, **dadurch gekennzeichnet, dass** es zusätzlich folgende Schritte umfasst:
- das Bewerten der im Partikelfilter gesammelte Rußmasse;
- wenn die im Partikelfilter gesammelte Rußmasse den zugelassenen Maximalwert erreicht,
- das Stoppen von Wassereinspritzungen; und
- das Durchführen der aktiven Regenerierung des Partikelfilters (1).

16. Verfahren nach Anspruch 14, **dadurch gekennzeichnet, dass** es zusätzlich folgende Schritte umfasst:
- das Messen der zwischen zwei aufeinanderfolgenden Druckwassereinspritzungen abgelaufenen Zeit;
- das Bewerten der im Partikelfilter gesammelten Rußmasse;
- wenn die zwischen zwei aufeinanderfolgenden Wassereinspritzungen abgelaufene Zeit kleiner als ein minimaler Zeitwert ist, das Stoppen von Wassereinspritzungen; und
- das Durchführen der aktiven Regenerierung des Partikelfilters (1), wenn die gesammelte Rußmasse oder der Druckverlust im Partikelfilter (1) den zugelassenen Maximalwert erreicht.

17. Verfahren nach Anspruch 14, **dadurch gekennzeichnet, dass** es zusätzlich folgende Schritte umfasst:
- das Messen der zwischen zwei aufeinanderfolgenden Druckwassereinspritzungen abgelaufenen Zeit;
- das Bewerten der im Partikelfilter gesammelten Rußmasse;
- wenn die zwischen zwei aufeinanderfolgenden Wassereinspritzungen abgelaufene Zeit kleiner als ein minimaler Zeitwert ist, das Erhöhen des maximalen Druckverlustes, welches im Partikelfilter (1) kontrolliert werden soll, in Abhängigkeit der Betriebsbedingungen des Motors (2) und das Neustarten des Wassereinspritzungsprozesses;
- wenn sich die Zeit zwischen Wassereinspritzungsereignissen nicht erhöht, sobald der maximale Druckverlust, welches im Partikelfilter (1) kontrolliert werden soll, erhöht wird, das Stoppen von Wassereinspritzungen; und
- das Durchführen der aktiven Regenerierung des Partikelfilters (1), wenn die gesammelte Rußmasse oder der Druckverlust im Partikelfilter (1) den zugelassenen Maximalwert erreicht.

18. Verfahren nach einem der Ansprüche 14, 15, 16 und 17, wobei das Einspritzwasser aus einem Tank (13) kommt, in welchem sich Kondenswasser sammelt, welches in der anderen Apparatur eines Fahrzeugs oder Anlage erzeugt wird, in welchem/welcher der Partikelfilter (1) installiert ist, **dadurch gekennzeichnet, dass** es zusätzlich folgende Schritte umfasst:
- das Messen des Wasserfüllstands im Tank (13); und
- das Einspritzen von Druckwasser in den Partikelfilter (1) in Abhängigkeit des im Tank (13) gemessenen Wasserfüllstands.

19. Verfahren nach Anspruch 18, **dadurch gekennzeichnet, dass** es zusätzlich folgende Schritte umfasst:
- das Messen der Wassertemperatur im Tank (13); und
- das Umlaufen von Kühlwasser in einem Wärmeaustauscher, welcher im Tank (13) angeordnet ist, wenn die im Tank (13) gemessene Wassertemperatur kleiner als ein minimaler Temperaturwert ist.

## Revendications

1. Système de filtre à particules pour moteurs comprenant un filtre à particules (1) situé dans une ligne d'échappement d'un moteur de combustion interne (2), comprenant un premier capteur de pression (12) aménagé à l'entrée (5) du filtre à particules (1) et un second capteur de pression (12) aménagé à la sortie du filtre à particules (1), pour déterminer une perte de pression entre l'entrée (5) et la sortie du filtre à particules (1), **caractérisé en ce qu'**il comprend en outre:
- un injecteur d'eau (6) situé dans la région d'entrée (5) du filtre à particules (1) pour injecter de l'eau pressurisée vers ledit filtre à particules (1) dans un procédé de restructuration pour restructurer les particules accumulées dans ledit filtre à particules (1);
- une conduite (9) aménagée entre au moins une source d'alimentation en eau et ledit injecteur (6);
- une pompe à injection (10) aménagée dans ladite conduite (9) pour augmenter la pression d'eau à une pression d'injection; et
- une unité de commande (11) commandant l'actionnement de la pompe à injection (10) en fonction de la perte de pression déterminée par les capteurs de pression (12), dans laquelle la restructuration des particules accumulées dans le monolithe du filtre à particules, produit par l'injection d'eau, réduit la perte de pression du filtre à particules sans avoir à mettre en oeuvre le procédé de régénération, sans réduire la masse de particules attrapée et sans réduire la performance de filtrage et en retardant en conséquence le temps d'application de techniques de régénération active.

2. Système de filtre selon la revendication 1, **caractérisé en ce que** l'unité de commande (11) actionne la pompe à injection (10) dépendant également de la vitesse (n) et du degré de charge (α) du moteur (2).

3. Système selon l'une quelconque des revendications précédentes, **caractérisé en ce qu'**au moins une source d'alimentation en eau est choisie parmi le groupe comprenant de l'eau de refroidissement pour refroidir le moteur (2), de l'eau de condensation dans divers équipements d'un véhicule ou une installation dans laquelle est installé ledit système, de l'eau de condensation des gaz d'échappement et n'importe quelle combinaison de celle-ci.

4. Système selon l'une quelconque des revendications précédentes, **caractérisé en ce qu'**il comprend un réservoir (13).

5. Système selon la revendication 4, **caractérisé en ce que** le réservoir (13) est rempli d'eau condensée de gaz d'échappement qui est obtenu dans un échangeur de chaleur (20).

6. Système selon l'une quelconque des revendications 1, 2 ou 4, **caractérisé en ce qu'**au moins une source d'alimentation en eau est un réservoir provenant de l'extérieur d'un véhicule ou une installation dans laquelle est installé ledit système.

7. Système selon l'une quelconque des revendications 4 à 6, **caractérisé en ce qu'**il comprend en outre un capteur de niveau (15) dans le réservoir (13) envoyant de l'information à l'unité de commande (11), ladite unité de commande (11) déterminant l'actionnement de la pompe à injection (10) sur la base de l'information du capteur de niveau (15).

8. Système selon l'une quelconque des revendications 6 et 7, comprenant en outre un échangeur de chaleur à l'intérieur du réservoir (13) dans lequel a lieu l'échange de chaleur entre l'eau d'injection stockée dans ledit réservoir (13) et l'eau de refroidissement pour refroidir le moteur (2) canalisé vers ledit échangeur de chaleur à travers un conduit (16, 25).

9. Système selon la revendication 8, **caractérisé en ce qu'**il comprend en outre une soupape (17, 26) aménagée dans ledit conduit (16, 25) et commandée par l'unité de commande (11) en fonction de l'information reçue du capteur de niveau (15).

10. Système selon la revendication 9, **caractérisé en ce qu'**il comprend en outre un capteur de température (18) dans le réservoir (13) envoyant de l'information sur la température de l'eau à l'unité de commande (11), ladite unité de commande (11) commandant la soupape (17, 26) sur la base de ladite information sur la température de l'eau.

11. Système selon l'une quelconque des revendications 4 à 10, **caractérisé en ce qu'**il comprend en outre une soupape de refoulement (19) commandée par l'unité de commande (11), la soupape de refoulement (19) étant ouverte lorsque le moteur (2) est arrêté pour refouler l'eau accumulée dans le réservoir (13).

12. Système selon l'une quelconque des revendications 4 à 11, **caractérisé en ce qu'**il comprend en outre de l'eau de refroidissement pour refroidir le moteur (2) en tant que source d'alimentation en eau supplémentaire.

13. Système selon la revendication 12, **caractérisé en ce qu'**il comprend un conduit (27) conduisant l'eau du réservoir (13) vers l'injecteur (6) et un conduit (28) conduisant l'eau du système de refroidissement (7) vers l'injecteur (6), et comprend en outre une soupape (29) aménagée dans le conduit (27) et une soupape (30) aménagée dans le conduit (28), l'unité de commande (11) commandant l'ouverture et la fermeture des soupapes (29, 30) en fonction d'un niveau d'eau dans le réservoir (13) déterminé par un capteur de niveau (15).

14. Procédé de réduction de la perte de pression d'un filtre à particules (1) situé dans une ligne d'échappement d'un moteur de combustion interne (2) selon la revendication 1, comprenant les étapes de:
- détection d'une perte de pression entre l'entrée et la sortie du filtre à particules (1); et
- injection d'eau pressurisée dans l'entrée du filtre à particules (1) lorsque la perte de pression atteint une valeur maximale permise;
de manière que les particules accumulées dans le filtre à particules (1) sont restructurées et la perte de pression à travers le filtre à particules (1) est réduite.

15. Procédé selon la revendication 14, **caractérisé en ce qu'**il comprend en outre les étapes de:
- évaluation de la masse de suie accumulée dans le filtre à particules;
- lorsque la masse de suie accumulée dans le filtre à particules atteint la valeur maximale permise;
- arrêt des injections d'eau; et
- mise en oeuvre de régénération active du filtre à particules (1).

16. Procédé selon la revendication 14, **caractérisé en ce qu'**il comprend en outre les étapes de:
- mesurage du temps écoulé entre deux injections consécutives d'eau pressurisée;
- évaluation de la masse de suie accumulée dans le filtre à particules;
- lorsque le temps écoulé entre deux injections consécutives d'eau est inférieur à une valeur de temps minimale, arrêt des injections d'eau; et
- mise en oeuvre de la régénération active du filtre à particules (1) lorsque la masse de sui accumulée ou la perte de pression dans le filtre à particules (1) atteint la valeur maximale permise.

17. Procédé selon la revendication 14, **caractérisé en ce qu'**il comprend en outre les étapes de:
- mesurage du temps écoulé entre deux injections consécutives d'eau pressurisée;
- évaluation de la masse de suie accumulée dans le filtre à particules;
- lorsque le temps écoulé entre deux injections consécutives d'eau est inférieur à une valeur de temps minimale, augmentation de la perte de pression maximale à commander dans le filtre à particules (1) en fonction des conditions opérationnelles du moteur (2) et remise en marche du procédé d'injection d'eau;
- lorsque le temps entre des événements d'injection d'eau n'augmente pas une fois que la perte de pression maximale à commander dans le filtre à particules (1) est augmentée, arrêt des injections d'eau; et
- mise en oeuvre de la régénération active du filtre à particule (1) lorsque la masse de suie accumulée ou la perte de pression dans le filtre à particules (1) atteint la valeur maximale permise.

18. Procédé selon l'une quelconque des revendications 14, 15, 16 et 17, dans lequel l'eau d'injection provient d'un réservoir (13) dans lequel s'accumule l'eau condensée produite dans les différents équipements d'un véhicule ou une installation dans laquelle est installé le filtre à particules (1), **caractérisé en ce qu'**il comprend en outre les étapes de:
- mesurage du niveau d'eau dans le réservoir (13); et
- injection d'eau pressurisée dans le filtre à particules (1) en fonction du niveau d'eau mesuré dans le réservoir (13).

19. Procédé selon la revendication 18, **caractérisée en ce qu'**il comprend les étapes de:
- mesurage de la température de l'eau dans le réservoir (13); et
- circulation de l'eau de refroidissement dans l'échangeur de chaleur aménagé dans le réservoir (13) lorsque la température de l'eau mesurée dans le réservoir (13) est inférieure à une valeur de température minimale.
